# EUROPEAN PATENT APPLICATION

(11) **EP 2 722 769 A1**
(43) Date of publication of application: **23.04.2014**
(21) Application number: 13186656.8
(22) Date of filing: 30.09.2013
(51) Int. Cl.: G06F 13/38, G06F 15/16

(54) **Multi-core processor and method for multiplexing network management port thereof**

(30) Priority: 22.10.2012 CN 201210404099
(71) Applicant: Huawei Technologies Co., Ltd., Longgang District, Shenzhen Guangdong 518129 (CN)
(72) Inventor: Huang, Kaijin, 518129 Shenzhen Guangdong (CN)
(74) Representative: Thun, Clemens

(57) **Abstract**

The present invention provides a multi-core processor and a method for multiplexing a network management port thereof, and relates to the field of processor technologies. The multi-core processor includes: a network management port, an initializing unit, and N control planes, where the initializing unit is configured to select one control plane as a management control plane from the N control planes, and enable a network management port packet reception interrupt only for the management control plane; the management control plane is configured to receive a packet from the network management port or another control plane, and according to characteristic information of each control plane and characteristic information of the received packet or a packet to be sent, send the packet to a CPU of this control plane or to another control plane and/or transmit the packet through the network management port. The multi-core processor and the method for multiplexing the network management port thereof according to the present invention, by enabling the network management port packet reception interrupt for the management control plane, finally implement multiplexing of the network management port between multiple control planes.

## Description

### TECHNICAL FIELD

The present invention relates to the processor technical field, and in particular, to a multi-core processor and a method for multiplexing a network management port thereof.

### BACKGROUND

A multi-core processor, which is a processor having multiple cores integrated on one chip with each core functioning as a CPU, has become a mainstream technology in the field of processor technologies due to its excellent performance. In a multi-core system, multiple cores serving as control planes may exist, where a control plane is a part for managing and controlling a device. Correspondingly, a core serving as a data plane may also exist, and the core is used for processing service data streams. With respect to a network device equipped with a multi-core processor, besides a network service port (network service port) for remote control, a network management port (network management port) (also referred to as a control plane port) may also be provided, where the port is independent of the network service port and is used exclusively by a control plane for management and maintenance. A remote network management or a management center may manage control planes by coupling to the network management port, thereby managing the network device.

In an existing network device equipped with a multi-core processor, the network management port is generally used by one control plane exclusively, and other control planes are controlled through a network service port. That is, one control plane is managed through the network management port, and other control planes are managed through network service ports. Because the ports are physically independent from each other, such control and management involves no port multiplexing, which is simple in implementation. However, when it is necessary to perform management by operating multiple control planes concurrently, a control center must be connected to the network management port and the network service ports, which definitely increases networking complexity.

Therefore, for a system equipped with a multi-core processor and having multiple control planes, it is very necessary to implement simultaneous management on multiple control planes through a network management port.

### SUMMARY

### Problem to Be Solved by the Present Invention

A problem to be solved by the present invention is to provide a multi-core processor that is capable of managing multiple control planes simultaneously by multiplexing a network management port, and a method for multiplexing the network management port thereof.

### Solution to the Problem

In order to solve the above problem, according to an aspect of the present invention, a multi-core processor is provided, which includes a network management port, an initializing unit, and N control planes, where the initializing unit is configured to select one control plane as a management control plane from the N control planes and enable a network management port packet reception interrupt only for the management control plane; the management control plane is configured to receive a packet from the network management port or another control plane, and according to characteristic information of each control plane and characteristic information of the received packet or a packet to be sent, send the packet to a CPU of this control plane or to another control plane, and/or transmit the packet through the network management port, where N is a positive integer greater than or equal to 2. Preferably, the multi-core processor further includes a cache unit, where the network management port is configured to write the received packet to the cache unit, and trigger the network management port packet reception interrupt for the management control plane; and the management control plane is specifically configured to respond to the network management port packet reception interrupt triggered by the network management port, and read the packet in the cache unit.

Preferably, other non-management control planes other than the management control plane are configured to receive the packet from the management control plane, and according to the characteristic information of each control plane and characteristic information of the received packet or packet to be sent, send the packet to a CPU of this control plane and/or to the management control plane.

Preferably, each of the control planes is further configured to store the characteristic information of all control planes.

According to another aspect of the present invention, a method for multiplexing a network management port of a multi-core processor is provided, which includes the following steps:
receiving, by a management control plane, a packet from a network management port or another control plane; and
sending, by the management control plane, according to characteristic information of each control plane and characteristic information of the received packet or a packet to be sent, the packet to a CPU of this control plane or to another control plane, and/or transmitting the packet through the network management port; where the management control plane is a control plane for which a network management port packet reception interrupt is enabled in N control planes of the multi-core processor, where N is a positive integer greater than or equal to 2.

Preferably, the receiving, by the management control plane, the packet from the network management port includes:
triggering, by the network management port, the network management port packet reception interrupt, and responding, by the management control plane, to the network management port packet reception interrupt and read the packet written by the network management port to a cache unit.

Preferably, for the management control plane, if the received packet is from the network management port, and the packet is a broadcast or multicast packet:
the management control plane sends the received packet to a CPU of this control plane and to other control planes.

Preferably, for the management control plane, if the received packet is from the network management port, and the packet is a unicast packet:
if the characteristic information of the received packet matches another control plane, sending, by the management control plane, the received packet to a corresponding another control plane;
if the characteristic information of the received packet matches this control plane, sending, by the management control plane, the received packet to the CPU of this control plane; and
if the characteristic information of the received packet does not match any control
plane, discarding, by the management control plane, the received packet.

Preferably, for the management control plane, if the received packet is from another control plane, and the packet is a broadcast or multicast packet:
sending, by the management control plane, the received packet to the CPU of this control plane and to other control planes, and transmitting the packet through the network management port.

Preferably, in the sending step, if the received packet is from another control plane and the packet is a unicast packet:
if the characteristic information of the received packet matches another control plane, sending, by the management control plane, the received packet to the corresponding another control plane;
if the characteristic information of the received packet matches this control plane, sending, by the management control plane, the received packet to the CPU of this control plane; and
if the characteristic information of the received packet does not match any control plane, transmitting, by the management control plane, the received packet through the network management port.

Preferably, for the management control plane:
if the characteristic information of the packet to be sent matches another control plane, sending, by the management control plane, the packet to be sent to the corresponding another control plane;
if the characteristic information of the packet to be sent matches this control plane, sending, by the management control plane, the packet to be sent to the CPU of this control plane; and
if the characteristic information of the packet to be sent does not match any control plane, transmitting, by the management control plane, the packet to be sent through the network management port.

Preferably, the characteristic information is an IP address, a MAC address, or a TCP/UDP port number.

### Effects of the Present Invention

By using the multi-core processor and the method for multiplexing the network management port thereof according to the present invention, a network management port packet reception interrupt is enabled for the management control plane, and finally multiplexing of the network management port between multiple control planes is implemented. By using the multi-core processor and the method for multiplexing the network management port thereof according to the present invention, the network management port may be multiplexed to simultaneously access multiple control planes, and even implement mutual access between multiple control planes.

### BRIEF DESCRIPTION OF DRAWINGS

FIG. 1 is a structural block diagram of a multi-core processor according to Embodiment 1 of the present invention;
FIG. 2 is a flowchart of a method for multiplexing a network management port of a multi-core processor according to Embodiment 2 of the present invention;
FIG. 3 is a schematic diagram of dispersion processing for control planes in a method for multiplexing a network management port of a multi-core processor according to Embodiment 2 of the present invention;
FIG. 4 is a schematic diagram for a management control plane to process a packet from another control plane or a packet to be sent in a method for multiplexing a network management port of a multi-core processor according to Embodiment 3 of the present invention; and
FIG. 5 is a schematic diagram for a non-management control plane of a multi-core processor to process a packet according to Embodiment 5 of the present invention.

### DESCRIPTION OF EMBODIMENTS

A multi-core processor and a method for multiplexing a network management port thereof proposed by the present invention are described in detail as follows with reference to accompanying drawings and embodiments.

### Embodiment 1

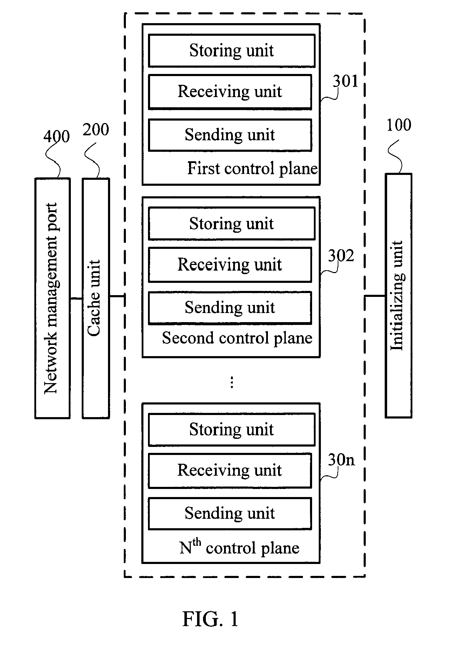

This embodiment provides a multi-core processor. As shown in FIG. 1, the multi-core processor according to this embodiment includes an initializing unit 100, a cache unit 200, N control planes 301, 302 ... 30n, and a network management port 400, where N is a positive integer greater than or equal to 2.

The initializing unit 100 is configured to select one control plane as a management control plane from the N control planes, and enable a network management port packet reception interrupt only for the management control plane. In other words, packets received by the network management port 400 are processed collectively by the management control plane. An interrupt is an efficient notification mechanism provided by a CPU, which associates a change in an external hardware signal with internal software code (that is, an interrupt handling program); when an external hardware signal is changed, a processor core directly suspends a current program that is being executed, and switches to execute an interrupt handling program, where the interrupt handling program has a higher priority than a common program. Types for enabling an interrupt of each control plane (core) may be configured for most multi-core processors. In the multi-core processor according to this embodiment, a network management port packet reception interrupt is enabled for the management control plane and the interrupt is disabled for other control planes. In this way, the network management port 400, on receipt of a packet, caches the packet in the cache unit 200 first, and then triggers the network management port packet reception interrupt for the management control plane, where the management control plane responds to the packet reception interrupt handling program, and obtains the packet in the cache unit 200, thereby receiving the packet. Meanwhile, the other control planes do not respond to the network management port packet reception interrupt because the interrupt is not enabled for the other control planes. By enabling the packet reception interrupt only for the management control plane, the packet received by the network management port 400 can be processed only on the management control plane.

In addition, each control plane includes a receiving unit, a sending unit, and a storing unit. Specifically, the storing unit may store characteristic information of all control planes, where characteristic information is used to uniquely identify a control plane, and may be, for example, a MAC address, an IP address, or a specific port of TCP/UDP, and the like. In the multi-core processor according to this embodiment, each control plane may be the management control plane that is used as a transit.

When a network management port packet reception interrupt is enabled for a control plane, that is, the control plane is initialized to be a management control plane, a receiving unit thereof receives a packet from the network management port 400 or another control plane. According to a transmission channel of the packet, the control plane may learn whether the received packet is from the network management port 400 or from, by inter-core communication, another control plane, and may perform packet dispersion correspondingly; a sending unit thereof is configured to send, according to characteristic information of each control plane and characteristic information contained by the received packet or a packet to be sent, the packet to a CPU of this control plane or to another control plane, and/or transmit the packet through the network management port.

When the network management port packet reception interrupt is not enabled for a control plane, that is, the control plane is a non-management control plane, a receiving unit thereof is configured to receive the packet forwarded by the management control plane, and a sending unit thereof is configured to send the packet to a CPU of this control plane and/or the management control plane according to characteristic information of each control plane and characteristic information of the received packet or a packet to be sent.

This embodiment further provides a method for multiplexing a network management port of the multi-core processor, which includes the following steps:
An initializing unit of a multi-core processor selects a control plane as a management control plane from N control planes, and enables a network management port packet reception interrupt for the management control plane but does not enable the interrupt for other control planes.

A receiving unit of the management control plane receives a packet from the network management port or another control plane.

A sending unit of the management control plane sends, according to characteristic information of the received packet or a packet to be sent, the packet to a CPU of this control plane or to another control plane, and/or transmits the packet through the network management port, which is specifically described as follows:
(1) The network management port, on receipt of the packet, caches the packet in a cache unit first, and then triggers the network management port packet reception interrupt for the management control plane. The receiving unit of the management control plane responds to the interrupt triggered by the network management port, and reads the packet in the cache unit. The sending unit of the management control plane then performs the following dispersion processing on the packet:
   a. if the received packet is a broadcast or multicast packet,
      the management control plane sends the received packet to a CPU of this control plane and other control planes; and
   b. if the received packet is a unicast packet, according to characteristic information of the received packet, the management control plane sends a packet that matches characteristic information of another control plane to the corresponding another control plane, sends a packet that matches characteristic information of this control plane to the CPU of this control plane, and discards a packet that does not match characteristic information of any control plane.
(2) When the received packet is from another control plane,
   c. if the packet is a broadcast or multicast packet, the management control plane sends the received packet to a CPU of this control plane and other control planes, and transmits the packet through the network management port; and
   d. if the packet is a unicast packet, the management control plane sends a packet that matches characteristic information of another control plane to the corresponding another control plane, sends a packet that matches characteristic information of this control plane to the CPU of this control plane, and transmits a packet that does not match characteristic information of any control plane through the network management port.
(3) When the packet is a packet to be sent by this control plane,
   the management control plane sends a packet to be sent that matches characteristic information of another control plane to the corresponding other control plane, sends a packet to be sent that matches characteristic information of this control plane to the CPU of this control plane, and transmits the packet to be sent that does not match characteristic information of any control plane through the network management port.

A control plane other than the management control plane, that is, non-management control planes, may execute the following steps in a packet forwarding process:
A receiving unit of a non-management control plane receives a packet that is forwarded, through inter-core communication, by the management control plane.

A sending unit of the non-management control plane sends, according to characteristic information of each control plane and characteristic information of the received packet or a packet to be sent, the packet to a CPU of this control plane and/or to the management control plane.

For the non-management control plane, a packet could be received by the non-management control plane may only be a packet whose final destination is the control plane. Therefore, for the received packet, the non-management control plane directly sends the packet to the CPU of this control plane; for a packet to be sent by this control plane, the non-management control plane sends a packet to be sent that matches characteristic information of this control plane to the CPU of this control plane, and sends a packet to be sent that does not match characteristic information of this control plane to the management control plane to perform corresponding processing.

### Embodiment 2

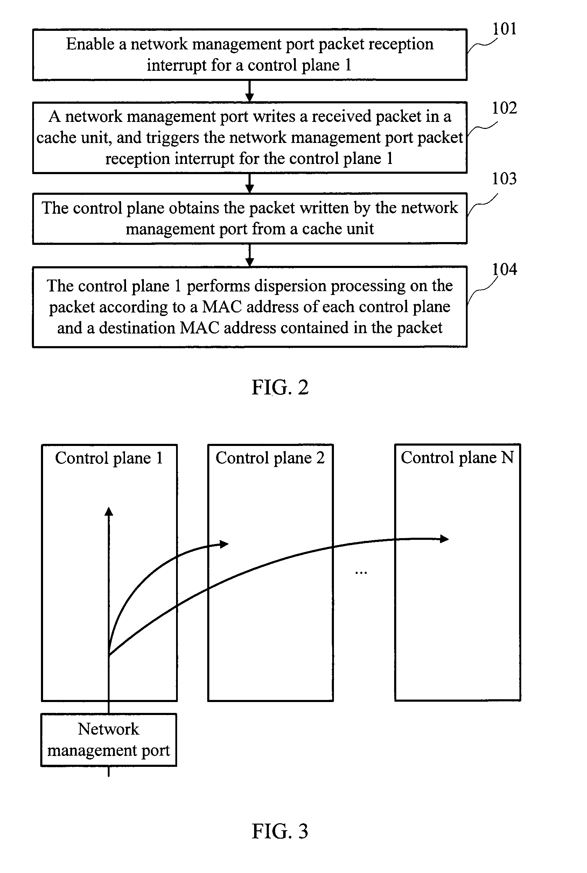

This embodiment provides a method for multiplexing a network management port of the multi-core processor shown in FIG. 1, where the multi-core processor includes N control planes which are a control plane 1, a control plane 2, ..., a control plane N, respectively, and each control plane has a dedicated MAC address which is a MAC 1, a MAC 2, ..., a MAC N, respectively. As shown in FIG. 2, when an external device attempts to log in to and manage the multi-core processor by sending a management packet (such as a telnet packet or an FTP packet), taking an example in which the control plane 1 is used as a management control plane, a specific procedure of the method for multiplexing the network management port of the multi-core processor includes:
S101. Enable a network management port packet reception interrupt for the control plane 1.
S102. The network management port writes a received packet to a cache unit, and triggers a network management port packet reception interrupt for the control plane 1.
S103. The control plane 1 obtains, according to the network management port packet reception interrupt, the packet written by the network management port from the cache unit. S104. The control plane 1 performs dispersion processing on the packet according to a MAC address of each control plane and a destination MAC address contained in the packet, where a specific dispersion procedure is shown in FIG. 3.

If the destination MAC address of the packet indicates a broadcast or multicast packet, the control plane 1 sends the packet to a CPU of this control plane and to other control planes, where multiple control planes are like multiple devices that are physically independent.

If the packet is a unicast packet and the destination MAC address is the MAC 1, the control plane 1 sends the packet to a CPU of this control plane; if the destination MAC address is a MAC address of another control plane, for example, the MAC 2, the control plane 1 forwards the packet to a corresponding control plane, for example, the control plane 2; and if the destination MAC address is not a MAC address of any control plane of the multi-core processor, the control plane 1 discards the packet directly.

### Embodiment 3

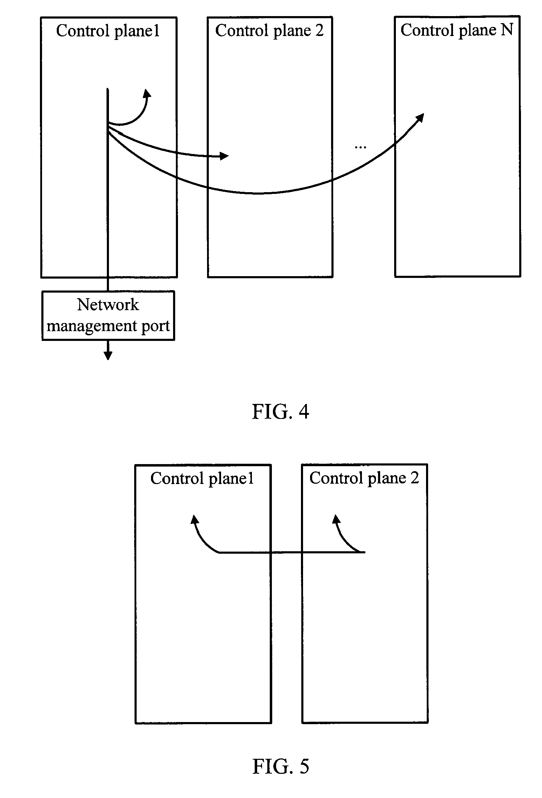

This embodiment provides a method for multiplexing a network management port of a multi-core processor shown in FIG. 1, where a control plane 1 is stilled used as an a management control plane. The control plane 1 processes a packet from another control plane or a packet to be sent in a procedure shown in FIG. 4.

If the packet from another control plane or the packet to be sent is a broadcast or multicast packet, the control plane 1 sends the packet to a CPU of this control plane and to other control planes, and transmits the packet through the network management port; if a destination MAC address of the packet is a MAC address of this control plane, that is, a MAC 1, the control plane 1 sends the packet directly to a CPU of this control plane; if a destination MAC address of the packet is a MAC address of a control plane N, the control plane 1 sends the packet to the control plane N through inter-core communication; and for a packet whose destination MAC address is not a MAC address of any control plane of the multi-core processor, the control plane 1 directly transmits the packet through the network management port.

### Embodiment 4

This embodiment provides a method for multiplexing a network management port of a multi-core processor, which is similar to Embodiment 2, where a difference lies in that characteristic information is an IP address, and control planes have independent IP addresses which are IP 1, IP 2, ..., IP N. When an external device attempts to log in to the multi-core processor by sending a management packet, a control plane 1 performs dispersion processing on a packet after obtaining the packet from a network management port.

If a destination IP address of the packet is the IP 1, the control plane 1 sends the packet to a CPU of this control plane; if a destination IP address is the IP N, the control plane 1 forwards the packet to a control plane N; and if a destination IP address is not an IP address of any control plane in the multi-core processor, the control plane 1 directly discards the packet.

In addition, similar to the embodiment 3, the control plane 1 in the multi-core processor according to this embodiment processes a packet from another control plane or a packet to be sent in the following procedure:
if a destination IP address of the packet from another control plane or of the packet to be sent is an IP address of this control plane, directly sending the packet to the CPU of this control plane; if a destination IP address of the packet is an IP address of the control plane N, sending the packet to the control plane N by inter-core communication; and for a packet whose destination IP address is not an IP address of any control plane of the multi-core processor, directly transmitting the packet through the network management port.

### Embodiment 5

This embodiment provides another method for multiplexing a network management port of a multi-core processor, and based on Embodiments 2 and 3 and by using an example in which a control plane 1 is a management control plane and a control plane 2 is a non-management control plane, the following describes how a non-management control plane other than a management control plane processes a packet by multiplexing the network management port. As shown in FIG. 5, a process of processing a packet by the control plane 2 is as follows:
if the control plane 1 forwards a packet to the control plane 2 through inter-core communication, the control plane 2 receives the packet, and because a destination of the packet may only be the control plane 2 itself, the control plane 2 sends the packet to a CPU of this control plane.

For a packet to be sent on the control plane 2, if characteristic information thereof (MAC/IP address) matches characteristic information of the control plane 2, the control plane 2 sends the packet to be sent to the CPU of this control plane; and if characteristic information thereof does not match any control plane of the multi-core processor, the control plane 2 sends the packet to be sent to the control plane 1 by inter-core communication.

The above embodiments are merely for illustration of the present invention and are not intended to limit the present invention. All equivalent technical solutions shall also fall within the scope of the present invention, and the patent protection scope of the present invention shall be subject to the claims.

## Claims

1. A multi-core processor, comprising: a network management port, an initializing unit, and N control planes, wherein
the initializing unit is configured to select one control plane as a management control plane from the N control planes, and enable a network management port packet reception interrupt only for the management control plane;
the management control plane is configured to receive a packet from the network management port or another control plane; and
according to characteristic information of each control plane and characteristic information of the received packet or a packet to be sent, send the packet to a CPU of this control plane or to another control plane, and/or transmit the packet through the network management port;
wherein N is a positive integer greater than or equal to 2.

2. The multi-core processor according to claim 1, wherein the multi-core processor further comprises a cache unit;
the network management port is configured to write the received packet to the cache unit, and trigger the network management port packet reception interrupt for the management control plane; and
the management control plane is specifically configured to respond to the network management port packet reception interrupt triggered by the network management port, and read the packet in the cache unit.

3. The multi-core processor according to claim 1, wherein a control plane other than the management control plane are configured to:
receive a packet from the management control plane; and
send the packet to a CPU of this control plane and/or to the management control plane according to characteristic information of each control plane and characteristic information of the received packet or a packet to be sent.

4. The multi-core processor according to any one of claims 1 to 3, wherein each of the control planes is further configured to store characteristic information of all control planes.

5. A method for multiplexing a network management port of a multi-core processor, comprising:
receiving, by a management control plane, a packet from a network management port or another control plane; and
sending, by the management control plane according to characteristic information of each control plane and characteristic information of the received packet or a packet to be sent, the packet to a CPU of this control plane or to another control plane, and/or transmitting the packet through the network management port; wherein
the management control plane is a control plane for which a network management port packet reception interrupt is enabled in N control planes of the multi-core processor, wherein N is a positive integer greater than or equal to 2.

6. The method according to claim 5, wherein the receiving, by a management control plane, a packet from a network management port comprises:
triggering, by the network management port, the network management port packet reception interrupt for the management control plane; and
responding, by the management control plane, to the network management port packet reception interrupt, and obtaining the packet written by the network management port to a cache unit.

7. The method according to claim 5 or 6, wherein if the received packet is from the network management port, and the packet is a broadcast or multicast packet,
sending, by the management control plane, the received packet to a CPU of this control plane and to other control planes.

8. The method according to claim 5 or 6, wherein if the received packet is from the network management port and the packet is a unicast packet,
if the characteristic information of the received packet matches another control plane, sending, by the management control plane, the received packet to a corresponding another control plane;
if the characteristic information of the received packet matches this control plane, sending, by the management control plane, the received packet to the CPU of this control plane; and
if the characteristic information of the received packet does not match any control plane, discarding, by the management control plane, the received packet.

9. The method according to claim 5, wherein if the received packet is from another control plane, and the packet is a broadcast or multicast packet,
sending, by the management control plane, the received packet to the CPU of this control plane and to other control planes, and transmitting the packet through the network management port.

10. The method according to claim 5, wherein if the received packet is from another control plane, and the packet is a unicast packet,
if the characteristic information of the received packet matches another control plane, sending, by the management control plane, the received packet to the corresponding another control plane;
if the characteristic information of the received packet matches this control plane, sending, by the management control plane, the received packet to the CPU of this control plane; and
if the characteristic information of the received packet does not match any control plane, transmitting, by the management control plane, the received packet through the network management port.

11. The method according to claim 5, wherein
if the characteristic information of the packet to be sent matches another control plane, sending, by the management control plane, the packet to be sent to the corresponding another control plane;
if the characteristic information of the packet to be sent matches this control plane, sending, by the management control plane, the packet to be sent to the CPU of this control plane; and
if the characteristic information of the packet to be sent does not match any control plane, transmitting, by the management control plane, the packet to be sent through the network management port.

12. The method according to any one of claims 5 to 11, wherein the characteristic information is an IP address, a MAC address, or a TCP/UDP port number.
